# EUROPEAN PATENT APPLICATION

(11) **EP 3 477 000 A1**
(43) Date of publication of application: **01.05.2019**
(21) Application number: 18200710.4
(22) Date of filing: 16.10.2018
(51) Int. Cl.: D06P 1/39, C09B 67/42, D06P 3/24, D06P 1/673

(54) **ACID DYE COMPOSITION, USE THEREOF AND METHOD USING THE SAME FOR DYEING NYLON TEXTILES**

(30) Priority: 25.10.2017 TW 10636665
(71) Applicant: Everlight Chemical Industrial Corporation, 106 Taipei City (TW)
(72) Inventor: LAI, Bao-Kun, 328 TAOYUAN CITY (TW); SUNG, Te-Chin, 328 TAOYUAN CITY (TW); PAN, Yuan-Pin, 328 TAOYUAN CITY (TW)
(74) Representative: van Dam, Vincent

(57) **Abstract**

An acid dye composition for dyeing nylon textiles is disclosed, which comprises: an acid dye; and a water soluble Ca²⁺ compound, wherein, on the basis of a total weight of the acid dye as 100 parts by weight, a content of the water soluble Ca²⁺ compound is ranged from 0.1 parts by weight to 50 parts by weight.

A method using this composition for dyeing nylon textiles is also disclosed.

The acid dye is preferably Acid Black 172, Acid Black ACE, Acid Yellow 220, Acid Red 315, Acid Blue 317, Acid Blue 113 or a combination thereof.

## Description

### CROSS REFERENCE TO RELATED APPLICATION

This application claims the benefits of the Taiwan Patent Application Serial Number 106136665, filed on October 25, 2017, the subject matter of which is incorporated herein by reference.

### BACKGROUND

### 1. Field

The present disclosure relates to an acid dye composition, a use thereof and a method using the same. More specifically, the present disclosure relates to an acid dye composition, a use thereof and a method using the same for dyeing nylon textiles.

### 2. Description of Related Art

As the highly attention on the environmental protection, the criteria for the dyeing effluent generated after textiles dyeing are getting strict. Thus, it is desirable to reduce the dye concentration in the dyeing effluent without changing the dyeing depth of the dyed textiles.

However, when the nylon textiles are dyed with the conventional acid dye (especially, for the extremely dark shade), the utilization rate of the dye is low due to the limited dyeing sites of nylon, resulting in a great amount of the dyeing effluent generated and the poor dyeing uptake degree. In particular, when the nylon microfiber textiles are dyed with the conventional acid dye, the visual depth of the dyed nylon microfiber textiles is not strong enough due to the specific surface area and the refraction of the nylon microfiber textiles, so high amount of acid dye has to be consumed to dye the nylon microfiber textiles. Thus, the dye concentration of the effluent after the washing off process had increased, and more water has to be used to clean the dyed nylon microfiber textiles. The dyeing effluent with higher dye concentration and the great amount of the wastewater may pollute our environment, and the environmental protection and the health and safety purpose cannot be achieved.

Therefore, it is desirable to provide an acid dye composition, which can reduce the dye concentration in the dyeing effluent to reduce the amount of the wastewater without changing the dyeing process and the dye property; thus, the purpose of the environmental protection in the current green chemistry can be achieved.

### SUMMARY

An object of the present disclosure is to provide an acid dye composition. When the acid dye composition is used for dyeing nylon textiles, the dyeing effluent can be greatly reduced. In addition, the present disclosure further provides a use of the acid dye composition and a method using the acid dye composition for dyeing nylon textiles.

The acid dye composition of the present disclosure comprises: an acid dye; and a water soluble Ca²⁺ compound. Herein, on the basis of a total weight of the acid dye as 100 parts by weight, a content of the water soluble Ca²⁺ compound is ranged from 0.1 parts by weight to 50 parts by weight. In addition, the present disclosure further provides a use of the aforesaid acid dye composition for dyeing nylon textiles. Furthermore, the present disclosure also provides a method for dyeing nylon textiles, which comprises the following steps: dyeing nylon textiles with the aforesaid acid dye composition.

In the acid dye composition of the present disclosure, the acid dye and the water soluble Ca²⁺ compound are mixed prior to the dyeing process. Thus, the content of the water soluble Ca²⁺ compound in the acid dye composition can be precisely controlled. In the present disclosure, because the acid dye and the water soluble Ca²⁺ compound are mixed in advance and the ratio of the acid dye to the water soluble Ca²⁺ compound is fixed in the acid dye composition, the water soluble Ca²⁺ compound does not have to be additionally added during the dyeing process when the acid dye composition of the present disclosure is used. Hence, the dyeing process is easily operated, and the problem of the unbalance ratio of the acid dye to the water soluble Ca²⁺ compound can be prevented. In addition, even though the water soluble Ca²⁺ compound is additionally added into the acid dye composition of the present disclosure, the property of the acid dye composition with the water soluble Ca²⁺ compound is similar to the property of the acid dye composition without the water soluble Ca²⁺ compound, so the dyeing process does not have to be adjusted. Furthermore, compared to the dyeing process for dyeing the nylon textiles by using the acid dye composition without the water soluble Ca²⁺ compound, the dye concentration in the dyeing effluent can be greatly reduced when using the acid dye composition of the present disclosure to dye the nylon textiles. Thus, the purpose of the environmental protection in the current green chemistry can be achieved.

In the present disclosure, the type of the water soluble Ca²⁺ compound is not particularly limited, as long as the water soluble Ca²⁺ compound has certain solubility in the aqueous solution. For example, the solubility of the water soluble Ca²⁺ compound is greater than 20 g per 100 g of water at 20°C. Specific examples of the water soluble Ca²⁺ compound include, but are not limited to, CaCl₂, Ca(C₂H₃O₂)₂, CaSO₄ or a combination thereof. In one example of the present disclosure, the water soluble Ca²⁺ compound is CaCl₂.

In the present disclosure, on the basis of a total weight of the acid dye as 100 parts by weight, the content of the water soluble Ca²⁺ compound can be ranged from 0.1 parts by weight to 50 parts by weight. For example, on the basis of a total weight of the acid dye as 100 parts by weight, the content of the water soluble Ca²⁺ compound is ranged from 5 parts by weight to 30 parts by weight, from 5 parts by weight to 20 parts by weight, from 8 parts by weight to 20 parts by weight or from 8 parts by weight to 10 parts by weight. In other words, a weight ratio of the water soluble Ca²⁺ compound to the acid dye can be ranged from 5% to 30%, from 5% to 20%, from 8% to 20% or from 8% to 10%.

In the present disclosure, the type of the acid dye is not particularly limited, as long as the acid dye is suitable for dyeing nylon textiles. For example, the acid dye can be Acid Black 172, Acid Black ACE, Acid Yellow 220, Acid Red 315, Acid Blue 317, Acid Blue 113 or a combination thereof. In one example of the present disclosure, the acid dye is Acid Black 172, Acid Black ACE or a combination thereof.

In the present disclosure, the form of the acid dye composition is not particularly limited, and can be solids (for example, powders) or a solution.

In the present disclosure, the use amount of the acid dye composition is not particularly limited, and can be adjusted according to the desired dyeing depth and/or the types of the nylon textiles to be dyed. For example, if hyperchromic dyed nylon textiles are desired, on the basis of a use amount of the nylon textiles as 100 parts by weight, a use amount of the acid dye can be ranged from 0.1 parts by weight to 10 parts by weight, from 1 parts by weight to 8 parts by weight, from 4 parts by weight to 8 parts by weight or from 4 parts by weight to 6 parts by weight. In other word, a weight ratio of the acid dye to the nylon textiles (i.e. on the weight of the fiber, o.w.f.) can be ranged from 0.1% to 10%, from 1% to 8%, from 4% to 8% or from 4% to 6%.

In the present disclosure, the nylon textiles can be normal nylon textiles, nylon microfiber textiles (a nylon microfiber substrate) or double jersey nylon textiles. In particular, if the nylon microfiber textiles are not dyed with the acid dye composition containing the water soluble Ca²⁺ compound, the visual depth of the dyed nylon microfiber textiles are not strong enough due to the specific surface area and the refraction of the nylon microfiber textiles, so high amount of acid dye has to be used to dye the nylon microfiber textiles, resulting in the environment pollution. However, when the nylon microfiber textiles are dyed with the acid dye composition of the present disclosure, the desired dyed depth can be achieved without increasing the use amount of the acid dye. In addition, the dye concentration in the dyeing effluent is low, the utilization rate of the acid dye molecules is increased, and the purpose of environmental protection can be achieved.

Other novel features of the disclosure will become more apparent from the following detailed description when taken in conjunction with the accompanying drawings.

### DETAILED DESCRIPTION OF EMBODIMENT

The following embodiments when read with the accompanying drawings are made to clearly exhibit the above-mentioned and other technical contents, features and/or effects of the present disclosure. Through the exposition by means of the specific embodiments, people would further understand the technical means and effects the present disclosure adopts to achieve the above-indicated objectives. Moreover, as the contents disclosed herein should be readily understood and can be implemented by a person skilled in the art, all equivalent changes or modifications which do not depart from the concept of the present disclosure should be encompassed by the appended claims.

In the following embodiments of the present disclosure, the nylon microfiber textiles are dyed with different acid dye compositions. The steps of the dyeing process, the washing off process and the examination process are briefly illustrated below.

### Dyeing process

An acid dye with a weight percentage corresponding to the nylon textiles to be dyed (% o.w.f.) and a buffer solution with pH5 were placed in a dyeing pot. Then, water was added into the dyeing pot, and the amount of the added water was 20 times of the wight of the nylon textiles to be dyed (bath ratio = 1:20). The dyebath was slowly heated to 98°C (heating rate = 1.0∼1.5°C/min), and the temperature was kept for 30 min. Then, the nylon textiles were removed from the dyebath, the absorbance of the dyeing effluent was detected, and the dyed nylon textiles were washing.

### Washing off process

After the dyeing process, the dyed nylon textiles were removed from the dyebath, and the pick-up rate of the dyed nylon texitles was 200%. Then, the dyed nylon texitles were placed in a pot containing a fixed amount of water, wherein a ratio of the amount of water to the dyed nylon texiltes were 1:20. The dyed nylon texiltes were washed off at room temperature for 10 min. The washing off process was repeated for three times.

### Examination process

The dyeing effluent was placed into a quartz tube (width = 1cm), and the visible light absorbance thereof was detected by an UV/VIS spectrometer. Visible light band (400 nm to 700 nm) was scanned, and the peak absorbance was recorded.

### Chemical oxygen demand (COD) test

Excess amount of a potassium dichromate solution was added into the water sample, followed by refluxing in a sulfuric acid solution (about 50 wt%). The remaining potassium dichromate was titrated with an ammonium ferrous sulfate solution. The chemical oxygen demand (COD) can be determined by the consumption amount of the potassium dichromate, wherein the COD refers to the amount of the organic molecules capable of being oxidized in the water sample.

### American dye manufacturers institute (ADMI) value test

True color means the color of the water sample after removing turbidity. The transmittance of the water sample at 590 nm, 540 nm and 438 nm was determined by the spectrophotometer. The Tristimulus value and the Munsell values were caculated from the transmittance, and then the DE value (Delta E, also called as Delta Error) was determined by Adams - Nickerson chromatic value formula. The DE value (Delta E, also called as Delta Error) is a calculated value of optical intensity, which is based on the maximum color differencce acceptable in the commercial product as one unit. The DE value was compared with the calibration curve to obtain the ADMI value of the water sample.

### Example 1

Acid Black 172 and CaCl₂ was mixed to dye the nylon microfiber textiles and the double jersey nylon textiles. In the present embodiment, the amount of the added water was 10 times of the weight of the nylon textiles (bath ratio = 1:10). The weight ratio of the acid dye to the nylon texiles was 5%. The results are shown in the following Table 1.

**Table 1**

| Acid Black 172 (o.w.f) | Ca²⁺ compound / acid dye | CaCl₂ (o.w.f) | Nylon microfiber textiles PM5/20D, ABS value of the dyeing effluent | Double jersey nylon textiles 70D/24f, ABS value of the dyeing effluent |
|---|---|---|---|---|
| 5% | 0.00% | 0.00% | 22200 | 12360 |
| 5% | 0.50% | 0.03% | 17720 | 10200 |
| 5% | 1.00% | 0.05% | 14280 | 8820 |
| 5% | 2.00% | 0.10% | 10880 | 5900 |
| 5% | 4.00% | 0.20% | 4860 | 2510 |
| 5% | 8.00% | 0.40% | 1558 | 851 |
| 5% | 12.00% | 0.60% | 912 | 547 |
| 5% | 16.00% | 0.80% | 581 | 447 |
| 5% | 20.00% | 1.00% | 461 | 379 |
| 5% | 24.00% | 1.20% | 424 | 333 |
| 5% | 30.00% | 1.50% | 375 | 281 |

From the results shown in Table 1, the optical intensity of the dyed effluent can be significantly reduced when CaCl₂ and the acid dye was co-used to dye the nylon microfiber textiles.

### Example 2

Acid Black 172 and Ca(CH₃COO)₂ was suitable to dye the nylon microfiber textiles and the double jersey nylon textiles. In the present embodiment, the amount of the added water was 10 times of the weight of the nylon textiles (bath ratio = 1:10). The weight ratio of the acid dye to the nylon texiles was 5%. The results are shown in the following Table 2.

**Table 2**

| Acid Black 172 (o.w.f) | Ca²⁺ compound / acid dye | Ca(CH₃COO)₂ (o.w.f) | Nylon microfiber textiles PM5/20D, ABS value of the dyeing effluent | Double jersey nylon textiles 70D/24f, ABS value of the dyeing effluent |
|---|---|---|---|---|
| 5% | 0.00% | 0.00% | 15720 | 19040 |
| 5% | 0.50% | 0.03% | 14400 | 15200 |
| 5% | 1.00% | 0.05% | 12820 | 12760 |
| 5% | 2.00% | 0.10% | 9480 | 10190 |
| 5% | 4.00% | 0.20% | 6150 | 6370 |
| 5% | 8.00% | 0.40% | 2333 | 2680 |
| 5% | 12.00% | 0.60% | 1383 | 1597 |
| 5% | 16.00% | 0.80% | 1037 | 1208 |
| 5% | 20.00% | 1.00% | 882 | 1034 |
| 5% | 24.00% | 1.20% | 754 | 832 |
| 5% | 30.00% | 1.50% | 691 | 718 |

From the results shown in Table 2, the optical intensity of the dyed effluent can be significantly reduced when Ca(CH₃COO)₂ and the acid dye was co-used to dye the nylon microfiber textiles.

### Example 3

Acid Black 172 and CaCl₂ was mixed to dye the nylon microfiber textiles. Herein, in the contrast group without CaCl₂, the weight ratio of the acid dye to the nylon texiles was 9.5%. In the goup with CaCl₂, the weight ratio of the acid dye to the nylon texiles was 6%, and the weight ratio of CaCl₂ to the acid dye was 8%. Even though the weight ratio of the acid dye to the nylon texiles in the group with CaCl₂ is lower than that in the contrast group without CaCl₂, similar dyeing depth can be obtained. The results are shown in the following Table 3.

**Table 3**

| Dye | Acid Black 172 | Acid Black 172+CaCl₂ |
|---|---|---|
| Use amount of the acid dye for obtaining similar dying strength | 9.5% | 6% |
| ABS value of the dyeing effluent | 83040 | 9490 |
| ABS value of the dyeing effluent after the 1^{st} washing off process | 8260 | 1505 |
| ABS value of the dyeing effluent after the 2^{nd} washing off process | 2700 | 874 |
| ABS value of the dyeing effluent after the 3^{rd} washing off process | 1537 | 583 |

From the results shown in Table 3, when CaCl₂ and the acid dye was co-used to dye the nylon microfiber textiles, the use amount of the acid dye can be reduced, the optical intensity of the dyeing effluent is low, and the depth of the dyed nylon microfiber textiles had been greatly improved.

In addition, the COD and the AMDI value of the dyeing effluent and the overall effluent after the washing off process performed for three times were measured in the present embodiment. The results are shown in the following Table 4.

**Table 4**

| Dye | Dyeing effluent | | Overall effluent | |
|---|---|---|---|---|
| | COD | ADMI | COD | ADMI |
| Acid Black 172 | 7,680 | 129,370 | 2,820 | 40,581 |
| Acid Black 172+CaCl₂ | 4,960 | 12,487 | 1,540 | 4,314 |

From the results shown in Table 4, when CaCl₂ and the acid dye was co-used to dye the nylon microfiber textiles, the COD and the ADMI values of the dyeing effluent and the overall effluent after the washing off process can be greatly reduced, so the purpose of the environmental protection in the current green chemistry can be achieved.

### Embodiment 4

Acid Yellow 220 (Y-220) and CaCl₂ was mixed to dye the nylon microfiber textiles. Herein, in the contrast group without CaCl₂, the weight ratio of the acid dye to the nylon texiles was 1% and 4%. In the goup with CaCl₂, the weight ratio of the acid dye to the nylon texiles was also 1% and 4%, and the weight ratio of CaCl₂ to the acid dye was 8%. The results are shown in the following Table 5.

**Table 5**

| | ABS value | | | |
|---|---|---|---|---|
| Dye | Dyeing effluent | Effluent after the 1^{st} washing off process | Effluent after the 2^{nd} washing off process | Effluent after the 3^{rd} washing off process |
| Y-220 (1%) | 58 | 9 | 8 | 8 |
| Y-220 (4%) | 361 | 56 | 40 | 43 |
| Y-220 (1.0%) + CaCl₂ (8%) | 44 | 12 | 10 | 10 |
| Y-220 (4.0%) + CaCl₂ (8%) | 183 | 87 | 52 | 70 |

### Example 5

Acid Red 315 (R-315) and CaCl₂ was mixed to dye the nylon microfiber textiles. Herein, in the contrast group without CaCl₂, the weight ratio of the acid dye to the nylon texiles was 1% and 4%. In the goup with CaCl₂, the weight ratio of the acid dye to the nylon texiles was also 1% and 4%, and the weight ratio of CaCl₂ to the acid dye was 8%. The results are shown in the following Table 6.

**Table 6**

| | ABS value | | | |
|---|---|---|---|---|
| Dye | Dyeing effluent | Effluent after the 1^{st} washing off process | Effluent after the 2^{nd} washing off process | Effluent after the 3^{rd} washing off process |
| R-315 (1%) | 35 | 6 | 5 | 4 |
| R-315 (4%) | 10950 | 1390 | 938 | 580 |
| R-315 (1.0%) + CaCl₂ (8%) | 13 | 1 | 1 | 1 |
| R-315 (4.0%) + CaCl₂ (8%) | 1469 | 256 | 237 | 170 |

### Example 6

Acid Blue 317 (B-317) and CaCl₂ was mixed to dye the nylon microfiber textiles. Herein, in the contrast group without CaCl₂, the weight ratio of the acid dye to the nylon texile was 1% and 4%. In the goup with CaCl₂, the weight ratio of the acid dye to the nylon texiles was also 1% and 4%, and the weight ratio of CaCl₂ to the acid dye was 8%. The results are shown in the following Table 7.

**Table 7**

| | ABS value | | | |
|---|---|---|---|---|
| Dye | Dyeing effluent | Effluent after the 1^{st} washing off process | Effluent after the 2^{nd} washing off process | Effluent after the 3^{rd} washing off process |
| B-317 (1%) | 47 | 11 | 10 | 10 |
| B-317 (4%) | 1683 | 173 | 76 | 31 |
| B-317 (1.0%) + CaCl₂ (8%) | 46 | 9 | 9 | 9 |
| B-317 (4.0%) + CaCl₂ (8%) | 284 | 55 | 37 | 28 |

### Example 7

Acid Blue 113 (B-113) and CaCl₂ was mixed to dye the nylon microfiber textiles. Herein, in the contrast group without CaCl₂, the weight ratio of the acid dye to the nylon texile was 1% and 4%. In the goup with CaCl₂, the weight ratio of the acid dye to the nylon texiles was also 1% and 4%, and the weight ratio of CaCl₂ to the acid dye was 8%. The results are shown in the following Table 8.

**Table 8**

| | ABS value | | | |
|---|---|---|---|---|
| Dye | Dyeing effluent | Effluent after the 1^{st} washing off process | Effluent after the 2^{nd} washing off process | Effluent after the 3^{rd} washing off process |
| B-113 (1%) | 46 | 6 | 5 | 4 |
| B-113 (4%) | 8320 | 1081 | 987 | 841 |
| B-113 (1.0%) + CaCl₂ (8%) | 53 | 7 | 5 | 5 |
| B-113 (4.0%) + CaCl₂ (8%) | 661 | 127 | 71 | 53 |

From the results shown in Table 5 to Table 8, when CaCl₂ and the acid dye was co-used to dye the nylon microfiber textiles and the weight ratio of the acid dye to the nylon texile was 4%, the optical intensity of the dyeing effluent can be reduced. In addition, the dye concentration in the effluent after the washing off process can be decreased, and the wastewater amount generated during the washing off process can be greatly reduced.

### Example 8

Acid Black 172 was mixed with CaCl₂ and CaSO₄ respectivly to dye the nylon microfiber textiles. The weight ratio of the acid dye to the nylon texiles was 6%. The weight ratio of CaCl₂ to the acid dye was 8%. The weight ratio of CaSO₄ to the acid dye was 7.37%. The results are shown in the following Table 9.

**Table 9**

| | ABS value | | | |
|---|---|---|---|---|
| Dye | Dyeing effluent | Effluent after the 1^{st} washing off process | Effluent after the 2^{nd} washing off process | Effluent after the 3^{rd} washing off process |
| Acid Black 172(6%) + CaCl₂ (8%) | 2390 | 348 | 291 | 198 |
| Acid Black 172(6%) + CaSO₄ (7.37%) | 2681 | 378 | 315 | 251 |
| Acid Black 172(6%) | 22800 | 2708 | 1391 | 949 |

From the results shown in Table 9, the effects on reducing the dyeing effluent and the effluent after the washing off process are similar in the groups with CaCl₂ and CaSO₄ when the Ca²⁺ equivalent concentration are the same. Herein, the group with CaCl₂ shows much better effect.

In conclusion, when the water soluble Ca²⁺ compound is added into the acid dye composition of the present disclosure, the concentration of the dyeing effluent can be reduced in the hyperchromic dyeing. Therefore, the wastewater generated during the washing off process can be greatly reduced to accomplish the purpose of the environmental protection in the current green chemistry.

Although the present disclosure has been explained in relation to its embodiment, it is to be understood that many other possible modifications and variations can be made without departing from the spirit and scope of the disclosure as hereinafter claimed.

## Claims

1. An acid dye composition for dyeing nylon textiles, comprising:
an acid dye; and a water soluble Ca²⁺ compound,
wherein, on the basis of a total weight of the acid dye as 100 parts by weight, a content of the water soluble Ca²⁺ compound is ranged from 0.1 parts by weight to 50 parts by weight.

2. The acid dye composition of claim 1, wherein a solubility of the water soluble Ca²⁺ compound is greater than 20 g per 100 g of water at 20°C.

3. The acid dye composition of claim 1 or claim 2, wherein the water soluble Ca²⁺ compound is CaCl₂, Ca(C₂H₃O₂)₂, CaSO₄ or a combination thereof,
preferably wherein the water soluble Ca²⁺ compound is CaCl₂.

4. The acid dye composition of any of the previous claims, wherein the content of the water soluble Ca²⁺ compound is ranged from 5 parts by weight to 30 parts by weight.

5. The acid dye composition of any of the previous claims, wherein the acid dye is Acid Black 172, Acid Black ACE, Acid Yellow 220, Acid Red 315, Acid Blue 317, Acid Blue 113 or a combination thereof.

6. A use of an acid dye composition for dyeing nylon textiles, wherein the acid dye composition comprises:
an acid dye; and
a water soluble Ca²⁺ compound,
wherein, on the basis of a total weight of the acid dye as 100 parts by weight, a content of the water soluble Ca²⁺ compound is ranged from 0.1 parts by weight to 50 parts by weight.

7. The use of claim 6, wherein a solubility of the water soluble Ca²⁺ compound is greater than 20 g per 100 g of water at 20°C; and/or
wherein the content of the water soluble Ca²⁺ compound is ranged from 5 parts by weight to 30 parts by weight.

8. The use of claim 6 or 7, wherein the water soluble Ca²⁺ compound is CaCl₂, Ca(C₂H₃O₂)₂, CaSO₄ or a combination thereof; and/or
wherein the acid dye is Acid Black 172, Acid Black ACE, Acid Yellow 220, Acid Red 315, Acid Blue 317, Acid Blue 113 or a combination thereof.

9. The use of any of the claims 6 to 8, wherein on the basis of a use amount of the nylon textiles as 100 parts by weight, a use amount of the acid dye is ranged from 0.1 parts by weight to 10 parts by weight.

10. The use of any of the claims 6 to 9, wherein the nylon textiles are a nylon microfiber substrate.

11. A method for dyeing nylon textiles, comprising the following steps:
dyeing nylon textiles with an acid dye composition, wherein the acid dye composition comprises:
an acid dye; and a water soluble Ca²⁺ compound,
wherein, on the basis of a total weight of the acid dye as 100 parts by weight, a content of the water soluble Ca²⁺ compound is ranged from 0.1 parts by weight to 50 parts by weight.

12. The method of claim 11, wherein a solubility of the water soluble Ca²⁺ compound is greater than 20 g per 100 g of water at 20°C; and/or wherein the content of the water soluble Ca²⁺ compound is ranged from 5 parts by weight to 30 parts by weight.

13. The method of claim 11 or 12, wherein the water soluble Ca²⁺ compound is CaCl₂, Ca(C₂H₃O₂)₂, CaSO₄ or a combination thereof; and/or wherein the acid dye is Acid Black 172, Acid Black ACE, Acid Yellow 220, Acid Red 315, Acid Blue 317, Acid Blue 113 or a combination thereof.

14. The method of any of the claims 11 to 13, wherein on the basis of a use amount of the nylon textiles as 100 parts by weight, a use amount of the acid dye is ranged from 0.1 parts by weight to 10 parts by weight.

15. The method of any of the claims 11 to 14, wherein the nylon textiles are a nylon microfiber substrate.
